# NEUE EUROPÄISCHE PATENTSCHRIFT

(11) **EP 2 132 050 B2**
(45) Veröffentlichungstag und Bekanntmachung des Hinweises auf die Entscheidung über den Einspruch: **24.07.2019**
(45) Hinweis auf die Patenterteilung: 23.11.2011
(21) Anmeldenummer: 08715701.2
(22) Anmeldetag: 07.02.2008
(51) Int. Cl.: B60C 27/12

(54) **LEICHT VERSTAUBARE GLEITSCHUTZVORRICHTUNG**
EASILY STOWABLE SLIDE PREVENTION DEVICE
DISPOSITIF ANTIDÉRAPANT À ARRIMAGE AISÉ

(30) Priorität: 30.03.2007 DE 102007015764
(43) Veröffentlichungstag der Anmeldung: 16.12.2009
(73) Patentinhaber: RUD Ketten Rieger & Dietz GmbH u. Co. KG, 73432 Aalen-Unterkochen (DE)
(72) Erfinder: RIEGER, Hansjörg, 73431 Aalen (DE); RIEGER, Benjamin, T., 73434 Aalen (DE)
(74) Vertreter: Grünecker Patent- und Rechtsanwälte PartG mbB
(86) Internationale Anmeldenummer: PCT/EP2008/000932
(87) Internationale Veröffentlichungsnummer: WO 2008/119411

(56) Entgegenhaltungen:
- EP-A- 1 621 370
- EP-A1- 1 745 948
- EP-A2- 2 066 127
- WO-A-2006/123498
- WO-A-2007/039923
- WO-A-2007/099127
- WO-A-2008/035000
- WO-A1-03/011618
- AT-U1- 8 905
- DE-A1- 2 108 386
- DE-A1- 2 355 291
- DE-A1- 3 722 900
- DE-A1- 3 825 748
- DE-A1- 19 959 381
- DE-U1- 20 115 651
- FR-A- 2 249 782
- JP-A- 2004 050 276
- US-A- 1 830 556
- US-A- 2 392 577
- US-A- 5 343 610

## Beschreibung

Gummibereifte Räder von Kraftfahrzeugen zeigen bei Schnee und Eis eine schlechte Traktion. Es ist bekannt zur Erhöhung der Traktion Schneeketten zu verwenden, die bei Bedarf auf das betreffende angetriebene Rad aufgelegt werden. Die allgemein bekannten Schneeketten bestehen aus Abschnitten von Rundgliederketten, die zu einer netzartigen Struktur miteinander verbunden sind.

Hierdurch wird die einzelne Schneekette biegeschlaff und lässt sich auf kleinem Raum verstauen.

Nachteilig bei den bekannten Schneeketten ist das verwendete Hauptmaterial, nämlich Stahl. Hierdurch wird die Schneekette sehr schwer und ist außerdem wenig komfortabel bei der Handhabung. Die Schneekette wird bei niedrigen Temperaturen benötigt, bei denen es als unangenehm empfunden wird, mit den Händen Stahlteile anzufassen.

Neben diesen aus Rundgliederketten bestehenden Schneeketten sind Gleitschutzvorrichtungen bekannt, die ausschließlich aus Textilmaterial bestehen. Das Textilmaterial basiert auf Gewebe und ist so zugeschnitten und verarbeitet, dass im angelegten Zustand die Gleitschutzvorrichtung eine sackartige Hülle für das Fahrzeugrad bildet, wobei die Öffnung des sackförmigen Gebildes an der Radinnenflanke liegt.

Das Anlegen einer solchen Gleitschutzvorrichtung ist für den Benutzer angenehmer, weil er bei der Handhabung des Textilgebildes keine kalten Finger bekommt. Darüber hinaus ist diese aus Textilmaterial bestehende Gleitschutzvorrichtung wesentlich leichter.

Neben diesen Vorteilen zeigt die textile Gleitschutzvorrichtung jedoch ein schlechteres Traktionsverhalten in lockerem Schnee und auf Eis.

Die gattungsbildende EP 621 370 A2 offenbart eine sackartige Gleitschutzvorrichtung für Kraftfahrzeugräder mit einem zur Verbesserung der Traktion dienenden Laufgürtel, der auf der Lauffläche des Fahrzeugreifens montiert und mittels flexibler ringförmiger innerer und äußerer Seitenabschnitte daran in Stellung gehalten wird. An dem äußeren Seitenabschnitt sind orthogonale Riemen befestigt, die auch mit dem Laufgürtel verbunden sind und einen Verstärkungseffekt haben. An dem inneren Seitenabschnitt ist ein elastischer Gummiring angebracht, der als Halte- und axiales Anschlagmittel dient. Der Laufgürtel und der äußere Seitenabschnitt sind aus einem Textilmaterial hergestellt, das ein Gewebe auf Kunststoffbasis ist.

FR 2 249 782 A offenbart eine Gleitschutzvorrichtung aus gewirkten Schnüren, deren Einzelfäden aus Kunststoff bestehen und in bestimmten Abständen untereinander maschenmäßig verbunden sind und deren freie Enden in Umfangsrichtung durch Verschweißen miteinander verbunden sind. Die gewirkte Schnur besteht aus Einzelfäden aus Polyurethan mit einer Innenverstärkung aus Naturfaserfäden oder Kunststoffaserfäden oder Kunststofffilamenten oder Metallfäden. An den Netzstreifenaußenseiten sind die Schnurenden in bestimmten Abständen mit je einer elastischen Schnur fadenmäßig vermascht.

WO 2006/123498 A beschreibt eine Gleitschutzvorrichtung mit einem Laufgürtel aus einem Fasermaterial aus Polyamid oder Polyester, einem inneren und einem äußeren Seitenabschnitt, die mit dem Laufgürtel verbunden sind. Der äußere Seitenabschnitt ist kreisförmig gestaltet, um die gesamtes Außenseite eines Fahrzeugrads abzudecken, und aus einer feinen Maschenware aus Polyester, Polyurethan, PVC oder Gummi hergestellt. An dem freien Rand des inneren Seitenabschnitts ist ein elastischer Halteriemen angebracht.

DE 201 15 651 U1 beschreibt eine Gleitschutzvorrichtung in Form einer Kunststoffhülle mit Klettverschluss, die um den Reifen gelegt wird, wobei auf der Innenseite ein rutschfestes Material vorgesehen ist, um ein Verrutschen der Hülle zu verhindern, und wobei auf der Außenseite strukturierte Elemente im Sinne von Profilstücken zur Erhöhung der Griffigkeit vorgesehen sind, um die Traktion zu verbessern.

Ausgehend hiervon ist es Aufgabe der Erfindung eine neue Gleitschutzvorrichtung zu schaffen, die sich durch ein geringeres Gewicht und eine bessere Handhabung auszeichnet.

Diese Aufgabe wird erfindungsgemäß durch die Gleitschutzvorrichtung mit den Merkmalen des Anspruches 1 gelöst.

Zu der neuen Gleitschutzvorrichtung gehören hauptsächlich drei Elemente, nämlich ein Laufgürtel, der auf der Lauffläche des Rades bzw. Reifens liegt und die Traktionseigenschaften verbessert, ein äußerer Fixierring und ein auf der innenliegenden Radflanke sich befindendes elastisches Haltemittel.

Da der Fixierring auf der Radaußenseite im Wesentlichen nur innere Haltekräfte jedoch keine Fliehkräfte des Laufgürtels aufzunehmen hat und von sich aus keinen Beitrag zur Traktion liefert, kann bei der neuen Gleitschutzvorrichtung der Fixierring aus einem leichten und hinreichend zugfesten Material bestehen. Es besteht keine Notwendigkeit, diesen Fixierring, wie beim Stand der Technik, aus Stahlkettenabschnitten zusammen zu setzen.

Der Laufgürtel kann ebenfalls im Hinblick auf die gewünschte Traktionseigenschaften optimiert werden, wobei für den Laufgürtel, je nach Anwendung, unterschiedliche Materialien und Strukturen in Frage kommen, wie sie weiter unten im Einzelnen erläutert und Gegenstand von Unteransprüchen sind.

Das elastische Haltemittel wiederum, das als axiales Anschlagmittel wirkt und sich auf der innenliegenden Radflanke befindet, besteht ebenfalls aus einem leichten Material, das in der Lage ist, zum Überstülpen geweitet zu werden. Es verhindern, dass im Betreib der Laufgürtel zur Radaußenseite wegwandern kann. Es braucht keine Fliehkräfte aufzunehmen, die beim Fahren im Laufgürtel auftreten. Diese werden im Laufgürtel selbst aufgenommen.

Die Verbindungselemente, die den Laufgürtel mit dem Fixierring verbinden, können ebenfalls aus leichtem Kunststoffmaterial hergestellt sein, das hinreichend verschleißfest ist und die notwendige Festigkeit mitbringt.

Aufgrund dieser Aufteilung der neuen Gleitschutzvorrichtung in die einzelnen Baugruppen ist es möglich, das Gewicht wesentlich zu reduzieren. Auch die Handhabung wird vereinfacht, weil wesentliche Teile nicht mehr aus Metall bestehen müssen. Der Benutzer kann beim Anlegen der Gleitschutzvorrichtung und bei der Demontage der Gleitschutzvorrichtung vom Rad die Gleitschutzvorrichtung an den nichtmetallischen Bereichen anfassen, was ihrer Handhabung "handsympatisch" macht.

Der Laufgürtel weist eine netzartige Struktur auf, wobei gemäß der vorliegenden Erfindung die netzartige Struktur von Abschnitten von Stahlgliederketten gebildet ist. Trotz der Verwendung von Gliederkettenabschnitten an dieser Stelle tritt eine erhebliche Gewichtseinsparung ein, weil der Rest der Gleitschutzvorrichtung nicht metallisch zu sein braucht und entsprechend leichter ist.

Der Laufgürtel kann vorteilhafterweise mehrere Sprossenelemente enthalten, die sich auf der Lauffläche befinden, die parallel zu der Erzeugenden der Lauffläche ausgerichtet sind und die in Umfangsrichtung voneinander gleichmäßig beabstandet sind. Diese Sprossenelemente können sowohl als Breithalter als auch als Elemente dienen, die zusätzlich die Traktion erhöhen. Hierzu können die Sprossenelemente schlupfmindernde Mittel enthalten.

Einige vorzugsweise alle Sprossenelemente können rohrähnlich gestaltet sein.

Diese flächigen Elemente können aus einem Elastomer gespritzt sein, das gegebenenfalls innen eine Stahlarmierung enthält.

Um den oder die Ringe aus Gliederketten an den Sprossenelementen zu schließen können die Sprossenelemente an den in Umfangsrichtung liegenden Flanken Verankerungsmittel für die Gliederkettenabschnitte aufweisen.

Gleichgültig, wie im Einzelnen der Laufgürtel gestaltet ist, kann er, um das Verstauen zu vereinfachen, bezüglich Achsen, die quer zu der Längserstreckung des Laufgürtels im montierten Zustand liegen, biegeschlaff sein.

Dieses biegeschlaffe Verhalten wird insbesondere durch die Verwendung des aus einem Textilmaterial hergestellten Fixierrings nicht beeinträchtigt.

Bei entsprechender Gestaltung des Fixierrings ist dieser ebenfalls biegeschlaff.

Das Textilmaterial des Fixierrings kann non-woven-Material oder Vlies sein, dieses non-woven-Material oder Vlies kann thermisch gebondet sein, um die Festigkeit zu verbessern. Es versteht sich, dass die Fasern des non-woven-Vlies zweckmäßigerweise lange Fasern oder Endlosfilamente sind.

Das Textilmaterial des Fixierrings kann auch durch ein Gewebe gebildet sein, dieses Gewebe kann als Gewebeband in Leinwandbindung ausgeführt sein.

Eine weitere Möglichkeit für das Textilmaterial des Fixierrings besteht in der verwendung eines Geflechts, insbesondere eines Rundgeflechts, weil auf diese Weise ein in Umfangsrichtung isotropes Lastaufnahmeverhalten erreicht werden kann.

Eine weitere Möglichkeit besteht in der Verwendung eines Abschnitts eines schlauchförmigen Rundgewebes, das zu einem Ringel aufgerollt ist. Der Ringel stellt ein Gebilde dar, dessen Querschnitt eine spiralige Struktur aufweist, wobei die spirale Struktur durch die Wand des Gewebeschlauchs erzeugt ist. Der Vorteil dieser Anordnung besteht darin, dass die Schußgarne in Umfangsrichtung liegen, womit eine im Umfangsrichtung isotrope Belastbarkeit zustande kommt.

Nach außen gesehen bekommt der Fixierring, der aus einem Rundgewebe geringelt ist, ein schlauchähnliches Aussehen.

Die Haltbarkeit des Fixierrings lässt sich verbessern, wenn die Ränder, beispielsweise durch eine Armierung, gegen ausfransen geschützt sind. Die Armierung kann von einem Elastomer gebildet sein, das die Kante des Fixierrings umschließt und mit dem Fixierring stoffschlüssig verbunden ist.

Eine solche Armierung lässt sich leicht durch Umspritzen herstellen, womit die Herstellungskosten gesenkt werden.

Eine sehr einfache Verbindung zwischen dem Fixierring und dem Laufgürtel wird erreicht, wenn der Fixierring mit Verankerungselementen versehen ist, an denen die Verbindungselemente zu verankern sind. Hierfür kommt Nähen in Frage.

Das Spannmittel kann von einem elastomeren Ring gebildet sein. Dieser elastomere Ring kann entweder einstückig gespritzt sein, oder er kann einen dauerhaften Verschluss aufweisen.

Die Verbindungselemente können auf der Seite des Fixierrings Schlaufen bilden, durch die der Spannring verläuft.

Im übrigen sind Weiterbildungen der Erfindung Gegenstand von Unteransprüchen.

Die nachfolgende Figurenbeschreibung erläutert Aspekte zum Verständnis der Erfindung. Weitere nicht beschriebene Details kann der Fachmann in der gewohnten Weise den Zeichnungen entnehmen, die insoweit die Figurenbeschreibung ergänzen. Es ist klar, dass eine Reihe von Abwandlungen möglich sind.

Die nachfolgenden Zeichnungen sind nicht unbedingt maßstäblich. Zur Veranschaulichung der wesentlichen Details kann es sein, dass bestimmte Bereiche übertrieben groß dargestellt sind. Darüber hinaus sind die Zeichnungen vereinfacht und enthalten nicht jedes bei der praktischen Ausführung gegebenenfalls vorhandene Detail. Die Begriffe "oben" und "unten" bzw. "innen" und "außen" beziehen sich auf die normale Einbaulage, bzw. Terminologie bei Kraftfahrzeugen.

In der Zeichnung sind Ausführungsbeispiele des Gegenstandes der Erfindung dargestellt.
- Fig. 1: zeigt einen Kraftfahrzeugreifen in Verbindung mit einem ersten Ausführungsbeispiel der erfindungsgemäßen Gleitschutzvorrich- tung, in einer perspektivischen Darstellung.
- Fig. 2: zeigt einen Ausschnitt aus dem Fixierring der Gleitschutzvorrichtung nach Fig. 1, in einer Draufsicht.
- Fig. 3: zeigt eines der Sprossenelemente der Gleitschutzvorrichtung nach Fig. 1, in einer Querschnittsdarstellung.
- Fig. 4: zeigt das Sprossenelement nach Figur 3 mit eingelassenen Spikes.
- Fig. 5: zeigt die Gleitschutzvorrichtung nach Fig. 1 mit einem anderen Verlauf der Gliederkettenabschnitte im Laufgürtel.
- Fig. 6: veranschaulicht einer Gleitschutzvorrichtung gemäß einem weiteren Ausführungsbeispiel unter Verwendung eines Seils als Fixierring.
- Fig. 7: zeigt einen Gewebeschlauch zur Verwendung als Fixierring, teilweise aufgerollt.

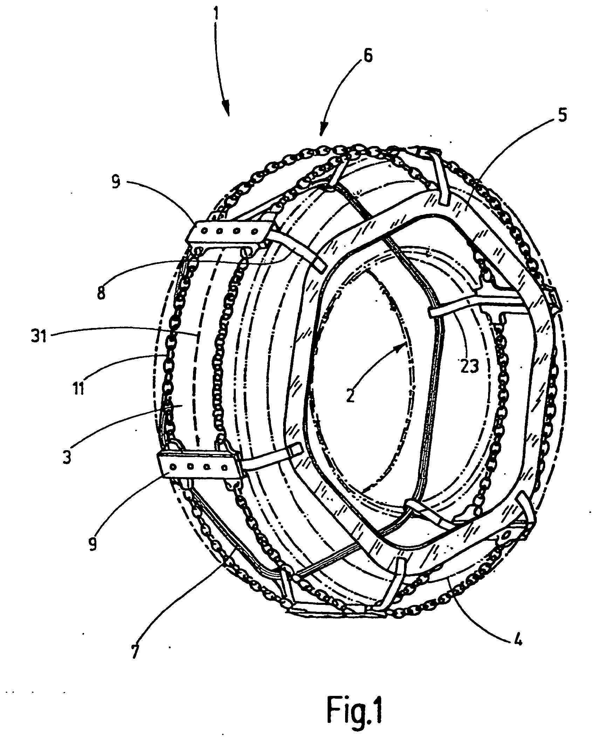

Figur 1 zeigt in einer perspektivischen Darstellung eine Gleitschutzvorrichtung 1, die auf einem gestrichelt angedeuteten Kraftfahrzeugreifen 2, vorzugsweise ein PKW Reifen aufgezogen ist. Der PKW Reifen ist als Phantom gezeichnet und mit gestrichelten Linien dargestellt. Er weist eine Lauffläche 3 sowie Reifenflanken 4 auf, von denen angenommen wird, dass die dem Betrachter zugekehrte Reifenflanke im montierten Zustand am Fahrzeug die Außenflanke ist.

Die Gleitschutzvorrichtung 5 wird bei Schnee und Eis auf dem Fahrweg verwendet um die Traktion des Reifens 2 zu verbessern.

Zu der Gleitschutzvorrichtung 1 gehören ein auf der Reifenaußenflanke 4 liegender Fixierring 5, ein längs der Lauffläche 3 sich erstreckender Laufgürtel 6 sowie ein Spannring 7 auf der Reifeninnenflanke.

Zwischen dem Spannring 7 und dem Fixierring 5 erstrecken sich bandförmige Verbindungs- oder Brückenelemente 8, die quer über die Lauffläche 3 liegen. Sie verbinden den Fixierring 5 mit dem Spanring 7 und sichern gleichzeitig den Laufgürtel 6 in axialer Richtung.

Der Laufgürtel 6 enthält Sprossenelemente 9, im vorliegenden Falle insgesamt 6, die untereinander durch Rundgliederkettenabschnitte 11 aus Stahl miteinander verbunden sind. Die Rundgliederkettenabschnitte 11 bilden, wie die Figur erkennen läßt, zwei konzentrische und zueinander parallele Ringe auf der Lauffläche 3. Die Sprossenelement 9 ergeben zusammen mit den Rundgliederkettenabschnitten 11 den in sich geschlossenen Laufgürtel 6. Sie definieren die Breite Laufgürtels 6.

Durch die Brückenelemente 8 ist bei montierter Gleitschutzvorrichtung 1 sowohl der Fixierring 5 als auch der Spannring 7 polygonförmig deformiert, in diesem Falle zu einem Sechseck.

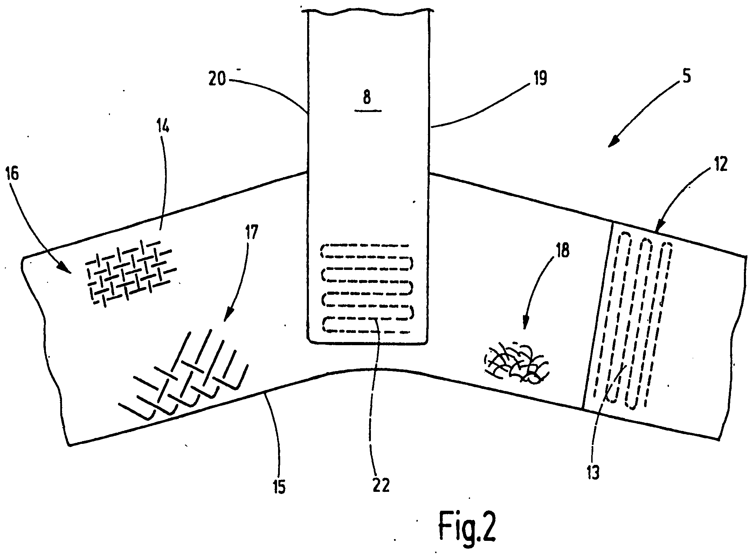

Figur 2 zeigt einen Ausschnitt aus dem Fixierring 5, und zwar an jener Stelle, an der ein Brückenelement 8 abgeht.

Der Fixierring 5 ist beispielsweise ein Textilband entsprechender Breite, dessen Enden, wie hier gezeigt, bei 12 überlappend mittels einer Naht 13 verbunden sind. Die Enden des Textilbands liegen an der Verbindungsstelle 12 mit ihren Flachseiten aufeinander.

Das Textilband bildet eine radial außen liegende Kante 14 und eine radial innen liegende Kante 15, die etwa parallel nebeneinander längs der Umfangsrichtung der Reifenflanke 4 verlaufen. Da das Textilband aus dem der Fixierring 5 hergestellt ist, ein gerades Textilband ist, würde es sich naturgemäß abweichend von der idealisierten Darstellung in den Figuren an dem Innenrand, gebildet durch die Bandkante 15, mehr oder weniger stark aufstellen, was hinsichtlich der Funktion jedoch keine Beeinträchtigung ergibt.

Das Band für den Fixierring 5 kann wie bei 16 angedeutet, ein Gewebe in Leinwandbindung sein. Die Kettfäden laufen wie bei Gewebebändern üblich, parallel zu den Bandkanten 14 und 15, während die Schussfäden quer dazu ausgerichtet sind. Das Band zur Erzeugung des Fixierrings 5 ist so gewebt, das die Bandkanten nicht offen sind d.h. auch nicht ausfransen können. Techniken, wie derartige Bänder herzustellen sind, sind in der Textiltechnik bekannt und brauchen deswegen hier nicht im Einzelnen erläutert zu werden.

Für die Fäden wird ein geeignetes Material gewählt, das hinreichend temperatur- und feuchtebeständig ist. Insbesondere eignen sich hier als Material für die Kett- und die Schussfäden Monofilamentfäden aus einem entsprechenden Kunststoff beispielsweise Polyester.

Eine weitere Möglichkeit für das Band besteht in der Verwendung eines Geflechts, wie diese bei 17 schematisiert angedeutet ist. Dabei ist das Geflecht so gezeigt, als würden bereits die einzelnen Fäden miteinander verflochten sein. Hierbei handelt es sich nur um eine schematische Darstellung, bei der praktischen Ausführungsform werden die als einzelne Striche darggestellten Elemente Fadenstränge sein, die miteinander verflochten sind.

Gegenüber dem Gewebe, wie es bei 16 gezeigt ist, hat das Geflecht gemäß Darstellung bei 17 den Vorteil sich gegebenenfalls etwas besser an die kreisform anpassen zu können, d.h. der innere Rand des Fixierrings, gebildet durch die Bandkante 15 steht weniger hoch.

Als dritte Möglichkeit für die Erzeugung des textilen Bandes, aus dem der Fixierring 5 hergestellt ist, besteht in der Verwendung eines Vlies, wie es bei 18 ausschnittsweise veranschaulicht ist. Ein Vlies besteht aus wirr angeordneten Fasern, die im vorliegenden Fall vorzugsweise an den Kreuzungspunkten gebondet sind, bevorzugt thermisch gebondet sind, damit ein insgesamt reißfestes Gebilde entsteht. Die Faserlänge richtet sich dabei nach der gewünschten Zugfestigkeit.

Für das Material der Fasern, Fäden oder Stränge im Falle des Geflechts oder des Vlies gilt das selbe was im Zusammenhang mit dem Gewebe bereits erläutert ist.

Durch die Verwendung eines textilen Flächengebildes als Ausgangsmaterial für den Fixierring 5 wird schlussendlich ein biegeschlaffes Gebilde erhalten, das sich bei Nichtgebrauch der Gleitschutzvorrichtung leichter zusammen oder zusammenfalten läßt und demzufolge nur geringen Stauraum erfordert. Darüber hinaus ist es sehr leicht, was die Handhabung der Gleitschutzvorrichtung wesentlich vereinfacht.

Die Brückenbänder 8 bestehen vorzugsweise ebenfalls aus Textilmaterial zweckmäßigerweise aus einem Gewebe, einem Geflecht oder einem Vlies. Es handelt sich hierbei auch um Bänder mit zueinander parallelen Rändern 19, 20. Diese Bänder sind auf dem Fixierring 5 wie gezeigt mittels einer Naht 22 befestigt. Sie führen über die Lauffläche 3 des Reifens 2 und bilden auf der Reifeninnenflanke eine Schlaufe 23, die in Figur 1 zu sehen ist. Die Schlaufe 23 wird erzeugt, indem das Brückenband 8 umgeschlagen und der umgeschlagene Teil entsprechend vernäht wird. Vor dem Vernähen der Schlaufe 23 wird der Spannring 7 eingelegt.

Bei dem Spannring 7 handelt es sich im einfachsten Fall um einen geeigneten, großen Elastomerering mit geringer Ringstärke von beispielsweise 6 - 12 mm. Letztlich kann es ein Großer O-Ring sein, dessen Durchmesser an den Durchmesser der Lauffläche 3 angepasst ist, so dass die Gleitschutzvorrichtung 1 leicht aufziehbar ist.

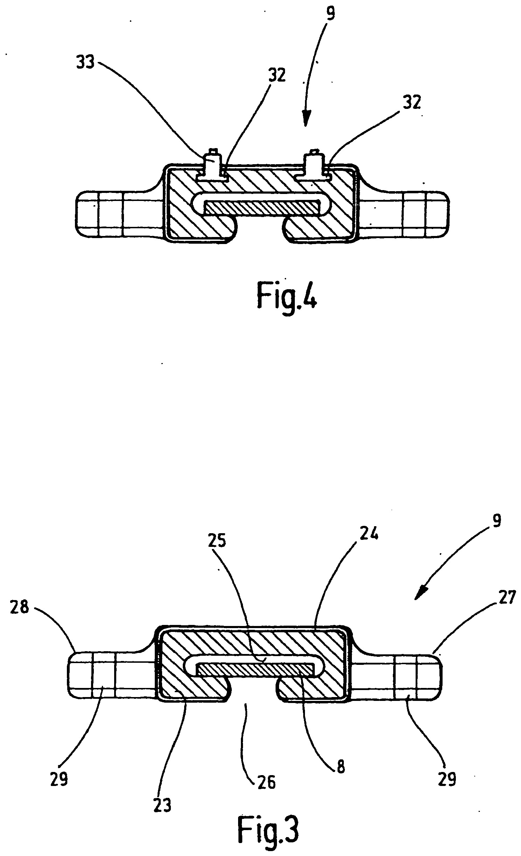

In Figur 3 sind die Sprossenelemente 9 im Querschnitt gezeigt sind. Jedes Sprossenelement 9 setzt sich aus einem länglichen metallischen Kern 23 und einer elastomeren Ummantelung 24 zusammen. Der metallische Kern 23 hat wie gezeigt, etwa rechteckigen Querschnitt und enthält eine in Längsrichtung verlaufende T-Nut 25, die sich in Richtung auf die Lauffläche 3 in einen T-Nutenschlitz 26 öffnet. Durch den breiten Teil der T-Nut 25 verläuft das Brückenband 8.

Der sich zu der Lauffläche 3 hin öffnende Nutenschlitz 26 ist so gewählt, dass nachträglich das Brückenband 8 in die T-Nut 25 eingefädelt werden kann und andererseits nicht die Gefahr besteht, dass das Brückenband 8 durch den Nutzenschlitz 26 herausgezogen werden kann, wenn die normalen Kräfte an ihnen wirken, die beim Fahren mit der erfindungsgemäßen Gleitschutzvorrichtung 1 auftreten. Außerdem sind die Sprossenelemente 9 auf dem zugehörigen Brückenband in Längsrichtung z.B. durch Kleben festgelegt.

Die elastomere Ummantelung 24 weist im Bereich des metallischen Kerns 23, dessen Länge im übrigen an die Breite der Lauffläche 3 angepasst ist, seitliche Fortsätze 27 und 28 auf. Jeder der Fortsätze 27 und 28 enthält eine Durchgangsbohrung 29 zum Verankern eines Glieds des Rundgliederkettenabschnittes 11. Die beiden Fortsätze 27 und 28 liegen sich bezüglich der Längsachse des Sprossenelementes 9 gegenüber. Die Anzahl der Paare von Fortsätzen 27 und 28 entspricht der Anzahl von Gliederkettenabschnitten 11, die sich zwischen benachbarten Brückenelementen 9 erstrecken. Diese Anzahl wiederum ist von der Breite der Lauffläche 3 abhängig. In Figur 1 sind zwei parallele Gliederkettenabschnitte 11 zwischen je zwei benachbarten Sprossenelementen 9 gezeigt. Ein dritter Gliederkettenabschnitt kann wie bei 31 angedeutet noch zusätzlich eingefügt sein, wenn die Lauffläche 3 entsprechend breit ist und einen solchen dritten Abschnitt erfordert.

Figur 4 zeigt ein weiteres Ausführungsbeispiel bei dem der metallische Kern 23 weitere radial nach außen zeigende T-Nuten 32 enthält, in die T-förmige Spikes 33 eingesetzt sind. Die T-förmigen Spikes 33 stehen über die elastomere Ummantelung 24 nach außen über. Die elastomere Ummantelung 24 dient im übrigen dazu, die Spikes 33 in Längsrichtung in der jeweiligen T-Nut 32 zu fixieren, die sich parallel nebeneinander in Längsrichtung des Kerns 23 erstrecken.

Die Anzahl von Sprossenelementen 9 richtet sich nach dem Durchmesser des Reifens 2 und der Festlegung wie viele der Sprossenelemente 9 gleichzeitig mit der Fahrbahn in Kontakt sein sollen oder wie groß der Abstand zwischen der Kontaktfläche und dem nächsten Sprossenelement sein darf, wenn die Aufstandsfläche kleiner ist als der Abstand zwischen benachbarten Brückenelementen 9.

Die Montage der beschriebenen Gleitschutzvorrichtung 1 kann erfolgen, indem der Benutzer von der Außenseite des Rads her den Spannring 9, ausgehend von dem obersten Punkt am Rad, über den Reifen 2 streift. Dieser Vorgang wird so lange fortgesetzt, bis sein weiteres Überstreifen durch den Kontakt zwischen dem Reifen 2 und der Fahrbahn beendet ist. Sobald die Montage soweit erfolgt ist, wird das Fahrzeug ein kurzes Stück bewegt, damit entweder von alleine der restliche Teil des Spannrings 7 auf die Reifeninnenflanke gelangt oder durch den Benutzer übergestreift werden kann.

Bei montierter Gleitschutzvorrichtung definiert der im Wesentlichen undehnbare und auf der Außenseite des Reifens 2 liegende Fixierring 5 die Lage des Laufgürtels 6 auf der Lauffläche 3 in axialer Richtung. Auch durch beliebiges Ziehen an den Brückenbändern wird es durch die Fixierwirkung des Fixierrings 5 nicht möglich sein, die Brückenbänder 8 weiter in Richtung auf die innenliegende Reifenflanke zu ziehen.

Die während der Benutzung auftretenden Fliehkräfte an dem Laufgürtel 6 werden innerhalb des Laufgürtels 6 aufgenommen, da dieser in Umfangsrichtung geschlossen ist. Die Kräfte, die in dem Laufgürtel 6 auftreten, bleiben in den Kettenabschnitten 11 und den sie untereinander verbindenden Brücksprossenelementen 9. Die Fliehkräfte werden insbesondere nicht auf die Brückenbänder 8 übertragen.

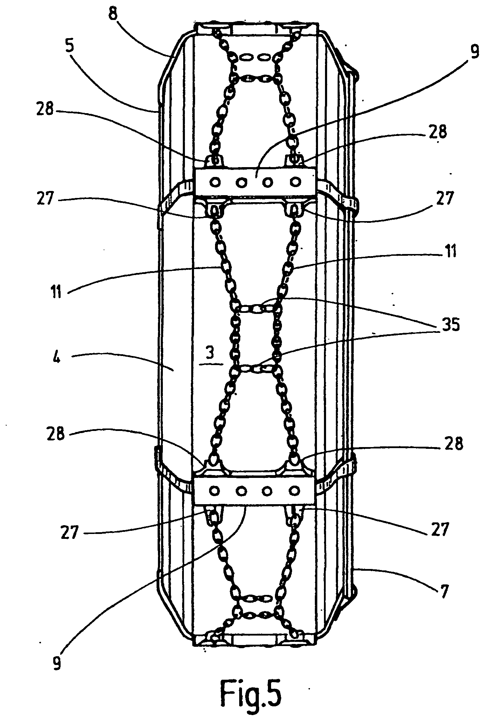

Anstelle der in Fig. 11 gezeigten beiden parallelen Bahnen oder Spuren aus Kettenausschnitten 11, die vorzugsweise als Rundgliederkettenabschnitte ausgeführt sind, kann auch das Netzmuster gemäß Fig. 5 verwendet werden. Hierbei sind die beiden nebeneinander verlaufende Kettenabschnitte 11 durch zwei voneinander beabstandete Querstücke 35 miteinander verbunden, so dass sich die gezeigte Taillierung ergibt. Die Querstücke 35 bestehen ebenfalls aus mehreren ineinander hängenden Rundgliedern, die einen Kettenabschnitt bilden. Die Dimensionierung der Kettenglieder entspricht dem der Dimensionierung der Kettenglieder in den Gliederkettenabschnitten 11.

Wie gezeigt, ist die Länge der Querstücke 35 geringer, als es dem Abstand der Fortsätze 27 bzw. 28 an den Sprossenelementen 9 entspricht. Im übrigen entspricht der Aufbau der Gleitschutzvorrichtung dem in Verbindung mit Figur 1 erläuterten Aufbau.

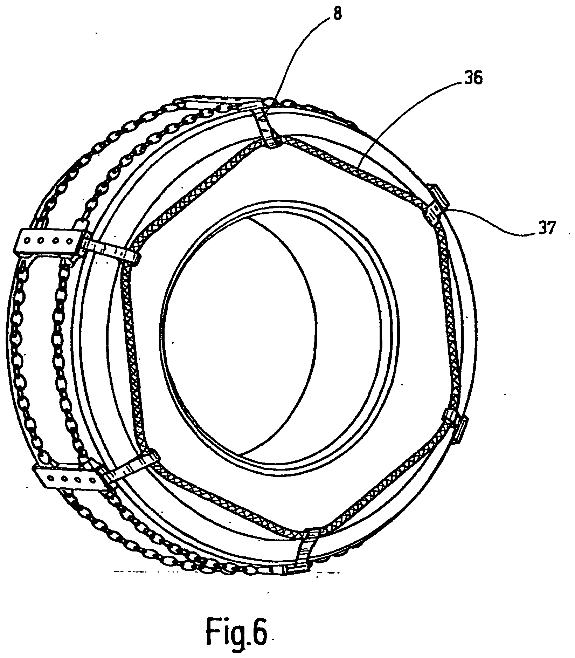

Fig. 6 zeigt schließlich eine Anordnung, bei der als Fixierring 5 ein geflochtenes Seil 36 verwendet wird, das durch Spleißen zu einem endlosen Ring geschlossen ist. Die Brückenbänder 8 bilden hier nicht nur auf der Seite der Radinnenflanke sondern auch auf der Außenflanke Schlaufen 37, durch die das Seil 36 hindurch führt.

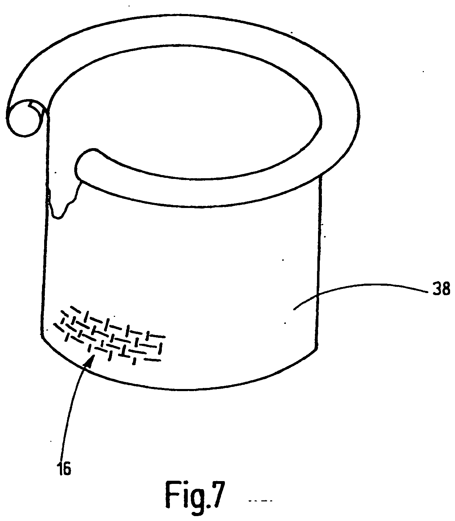

Schließlich ist es denkbar, wie Fig. 7 zeigt, ein sogenanntes Rundgewebe zu verwenden. Hierbei wird ein endloser Gewebeschlauch erzeugt, der nach dem Weben in Längsabschnitte geschnitten wird. Ein solcher Längsabschnitt ist in Fig. 7 gezeigt und mit 38 bezeichnet. Der Gewebeschlauch 38 wird von einem Ende her wie dargestellt, auf bzw. in sich aufgerollt, so dass er bis zur Gänze aufgerollt ist. Es entsteht damit eine Doughnut-form, die ebenfalls als Fixierring verwendet werden kann. In diesem Ring laufen die beim Weben eingefügten Schussfäden in Umfangsrichtung des Rings, während die Kettfäden bezogen auf den Querschnitt in Spiralrichtung liegen.

Auch in diesem Falle wird ein Fixierring erreicht, der sehr flexibel ist und alle oben erwähnten Vorteile aufweist.

Ersichtlicherweise ist in die neue Gleitschutzvorrichtung verglichen mit sogenannten Schneeketten sehr leicht, weil sich die metallischen Teile auf wenige Elemente des Laufgürtels beschränken. Alle übrigen weder mittelbar noch unmittelbar mit der Fahrbahn in Berührung stehenden Teile sind aus Textilmaterial hergestellt, wodurch sich eine enorme Gewichtsersparnis ergibt. Durch die Verwendung von Textilmaterial bleibt aber andererseits der wesentliche Vorteil, den aus Stahl bestehende Schneeketten mitbringen, erhalten, nämlich die Eigenschaft sehr biegeschlaff zu sein. Auch die neue Gleitschutzvorrichtung wird sich deswegen sehr leicht verpacken lassen. Da sie weniger Metallteile enthält, ist sie obendrein wesentlich leichter und auch handsympathischer beim Anlegen.

Eine Gleitschutzvorrichtung weist einen auf der Radaussenseite befindlichen Fixierring aus Textilmaterial auf. Von dem Fixierring gehen Brückenbänder aus, die zu einem auf der Radinnenseite liegenden Spannring laufen. Auf den Brückenbändern sitzen Sprossenelemente, die Teil des Laufgürtels sind und die in Umfangsrichtung der Gleitschutzvorrichtung durch Gliederkettenabschnitte miteinander verbunden sind.

## Patentansprüche

1. Gleitschutzvorrichtung für Kraftfahrzeugräder (2), die eine Lauffläche (3) und Radflanken (4) aufweisen, mit einem Laufgürtel (6), der bei montierter Gleitschutzvorrichtung (1) sich längs der Lauffläche erstreckend und in Umfangsrichtung geschlossen auf der Lauffläche (3) des Fahrzeugreifens (2) liegt, um die Traktion des Fahrzeugrads auf eis- oder schneebedeckter Fahrbahn zu verbessern, mit einem Fixierring (5), der sich auf der äußeren Radflanke (4) befindet und aus Textilmaterial besteht, dessen Ausgangsmaterial Kunststoff ist, mit bandförmigen Verbindungselementen (8), die den Laufgürtel (6) mit dem Fixierring (5) verbinden, und mit einem elastischen Halte- und Anschlagmittel (7), das sich auf der inneren Radflanke befindet und über die Verbindungselemente (8) mit dem Laufgürtel (6) verbunden ist, wobei der Laufgürtel (6) eine netzartige Struktur aufweist, die Gliederkettenabschnitte (11,35) aufweist und wobei wegen des in Umfangsrichtung geschlossenen Laufgürtels (6) die während der Benutzung auftretenden Fliehkräfte an dem Laufgürtel (6) innerhalb des Laufgürtels (6) aufgenommen und nicht auf die Verbindungselemente (8) übertragen werden.

2. Gleitschutzvorrichtung nach Anspruch 1, **dadurch gekennzeichnet, dass** die Gliederkettenabschnitte (11) lediglich in Umfangsrichtung liegen.

3. Gleitschutzvorrichtung nach Anspruch 1, **dadurch gekennzeichnet, dass** zwei parallel Bahnen von Gliederkettenabschnitten (11) auf der Lauffläche (3) liegen.

4. Gleitschutzvorrichtung nach Anspruch 1, **dadurch gekennzeichnet, dass** der Laufgürtel (6) mehrere Sprossenelemente (9) enthält, die sich auf der Lauffläche (3) befinden, die parallel zu der Erzeugenden der Lauffläche (3) ausgerichtet sind und die in Umfangsrichtung voneinander gleichmäßig beabstandet sind.

5. Gleitschutzvorrichtung nach Anspruch 4, **dadurch gekennzeichnet, dass** die Sprossenelemente (9) als Breithalter des Laufgürtels (6) dienen.

6. Gleitschutzvorrichtung nach Anspruch 4, **dadurch gekennzeichnet, dass** die Sprossenelemente (9) schlupfmindernde Mittel (33) aufweisen.

7. Gleitschutzvorrichtung nach Anspruch 4, **dadurch gekennzeichnet, dass** wenigstens einige, vorzugsweise alle Sprossenelemente (9) rohrähnlich gestaltet sind und dass durch je ein rohrähnliches Sprossenelement (9) ein Verbindungselement (8) führt.

8. Gleitschutzvorrichtung nach Anspruch 4, **dadurch gekennzeichnet, dass** jedes Sprossenelement (9) an seinen in Umfangsrichtung liegenden Seiten Verankerungsmittel (27,28) für Gliederketten (11) aufweist.

9. Gleitschutzvorrichtung nach Anspruch 1, **dadurch gekennzeichnet, dass** der Laufgürtel (6) Metallelemente (23) aufweist, die durch ein Elastomer (24) oder ein Polymer (24) ummantelt sind.

10. Gleitschutzvorrichtung nach Anspruch 1, **dadurch gekennzeichnet, dass** der Laufgürtel (6), zumindest bezüglich Achsen, die quer zu der Längserstreckung des Laufgürtels (6) liegen, biegeschlaff ist.

11. Gleitschutzvorrichtung nach Anspruch 1, **dadurch gekennzeichnet, dass** der Fixierring (5) biegeschlaff ist.

12. Gleitschutzvorrichtung nach Anspruch 1, **dadurch gekennzeichnet, dass** das Textilmaterial des Fixierrings (5) non-woven-Material (18) oder Vlies ist.

13. Gleitschutzvorrichtung nach Anspruch 12, **dadurch gekennzeichnet, dass** das non-woven-Material (18) thermisch gebondet ist.

14. Gleitschutzvorrichtung nach Anspruch 1, **dadurch gekennzeichnet, dass** der Fixierring (5) wenigstens ein Gewebeband aufweist.

15. Gleitschutzvorrichtung nach Anspruch 14, **dadurch gekennzeichnet, dass** das Gewebeband (16) eine Leinwandbindung aufweist.

16. Gleitschutzvorrichtung nach Anspruch 1, **dadurch gekennzeichnet, dass** das Textilmaterial des Fixierrings (5) ein Geflecht (17,36), vorzugsweise in Form eines Seils ist.

17. Gleitschutzvorrichtung nach Anspruch 1, **dadurch gekennzeichnet, dass** der Fixierring (4) aus einem Abschnitt eines Rundgewebes (38) hergestellt ist, der zu einem Ringel aufgerollt ist.

18. Gleitschutzvorrichtung nach Anspruch 1, **dadurch gekennzeichnet, dass** die Ränder (14,15) des Fixierrings armiert sind.

19. Gleitschutzvorrichtung nach Anspruch 18, **dadurch gekennzeichnet, dass** die Armierung von einem Elastomer gebildet ist, das die Kante (14,15) des Fixierrings (5) umschließt und mit dem Fixierring (5) stoffschlüssig verbunden ist.

20. Gleitschutzvorrichtung nach Anspruch 1, **dadurch gekennzeichnet, dass** die Verbindungselemente (8) mit dem Fixierring (5) vernäht sind.

21. Gleitschutzvorrichtung nach Anspruch 1, **dadurch gekennzeichnet, dass** die Verbindungselemente (8) aus Textilmaterial bestehen.

22. Gleitschutzvorrichtung nach Anspruch 1, **dadurch gekennzeichnet, dass** das elastische Haltemittel (7) von einem elastomeren Ring gebildet ist.

23. Gleitschutzvorrichtung nach Anspruch 22, **dadurch gekennzeichnet, dass** der elastomere Ring einstückig gespritzt ist.

24. Gleitschutzvorrichtung nach Anspruch 1, **dadurch gekennzeichnet, dass** die Verbindungselemente (8) auf der Seite des elastische Haltemittels (7) Schlaufen (23) bilden, in die das elastische Haltemittel (7) eingelegt ist.

25. Gleitschutzvorrichtung nach Anspruch 24, **dadurch gekennzeichnet, dass** die Schlaufen (23) durch eine Naht oder stoffschlüssig geschlossen sind.

## Claims

1. Slide prevention device for motor vehicle wheels (2) that have a running surface (3) and wheel flanks (4),
with a running belt (6), the running belt lying on the running surface (3) of the vehicle tyre (2) in a manner lengthways to the running surface and is closed in the peripheral direction, when the slide prevention device (1) is mounted in order to improve the traction of the vehicle wheel on an ice- or snow-covered road surface,
with a fastening ring (5), which is located on the outer wheel flank (4) and is made from textile material, the starting material of which is plastic,
with band-shaped connection elements (8), which connect the running belt (6) to the fastening ring (5), and
with an elastic holding and stop element (7), which is located on the inner wheel flank and is connected to the running belt (6) by means of the connection elements (8), wherein the running belt (6) has a mesh-like structure, which has link chain sections (11, 35), and wherein due to the running belt (6) being closed in the peripheral direction, the centrifugal forces, occurring during use, are received at the running belt (6) within the running belt (6) and not transferred onto the connection elements (8).

2. Slide prevention device according to claim 1, **characterised in that** the link chain sections (11) only lie in the peripheral direction.

3. Slide prevention device according to claim 1, **characterised in that** two parallel runs of link chain sections (11) lie on the running surface (3).

4. Slide prevention device according to claim 1, **characterised in that** the running belt (6) contains multiple cross bar elements (9), which are located on the running surface (3), are oriented parallel to the generatrix of the running surface (3) and are uniformly spaced from one another in the peripheral direction.

5. Slide prevention device according to claim 4, **characterised in that** the cross bar elements (9) serve as expanders of the running belt (6).

6. Slide prevention device according to claim 4, **characterised in that** the cross bar elements (9) have slip-reducing elements (33).

7. Slide prevention device according to claim 4, **characterised in that** at least some, preferably all, of the cross bar elements (9) are tube-like in structure, and that a connection element (8) runs through each tube-like cross bar element (9).

8. Slide prevention device according to claim 4, **characterised in that** each cross bar element (9) has anchoring elements (27, 28) for link chains (11) on its sides lying in the peripheral direction.

9. Slide prevention device according to claim 1, **characterised in that** the running belt (6) has metal elements (23), which are encased by an elastomer (24) or a polymer (24).

10. Slide prevention device according to claim 1, **characterised in that** the running belt (6) is pliant at least with respect to axes lying transversely to the longitudinal extent of the running belt (6).

11. Slide prevention device according to claim 1, **characterised in that** the fastening ring (5) is pliant.

12. Slide prevention device according to claim 1, **characterised in that** the textile material of the fastening ring (5) is non-woven material (18) or fleece.

13. Slide prevention device according to claim 12, **characterised in that** the non-woven material (18) is thermally bonded.

14. Slide prevention device according to claim 1, **characterised in that** the fastening ring (5) has at least one fabric band.

15. Slide prevention device according to claim 14, **characterised in that** the fabric band (16) has a linen weave.

16. Slide prevention device according to claim 1, **characterised in that** the textile material of the fastening ring (5) is a braid (17, 36), preferably in the form of a rope.

17. Slide prevention device according to claim 1, **characterised in that** the fastening ring (4) is produced from a section of a tubular fabric (38), which is rolled up into a hoop.

18. Slide prevention device according to claim 1, **characterised in that** the edges (14, 15) of the fastening ring are reinforced.

19. Slide prevention device according to claim 18, **characterised in that** the reinforcement is formed by an elastomer, which encloses the edge (14, 15) of the fastening ring (5) and is integrally joined to the fastening ring (5).

20. Slide prevention device according to claim 1, **characterised in that** the connection elements (8) are sewn to the fastening ring (5).

21. Slide prevention device according to claim 1, **characterised in that** the connection elements (8) are made from textile material.

22. Slide prevention device according to claim 1, **characterised in that** the elastic holding element (7) is formed from an elastomeric ring.

23. Slide prevention device according to claim 22, **characterised in that** the elastomeric ring is injected in one piece.

24. Slide prevention device according to claim 1, **characterised in that** the connection elements (8) form loops (23) on the side of the elastic holding element (7), into which loops the elastic holding element (7) is inserted.

25. Slide prevention device according to claim 24, **characterised in that** the loops (23) are closed integrally or by a seam.

## Revendications

1. Dispositif antidérapant pour des roues de véhicule automobile (2) qui présentent une bande de roulement (3) et des flancs de roue (4), comprenant une ceinture de roulement (6) qui, lorsque le dispositif antidérapant (1) est monté, est appliquée sur la bande de roulement (3) du pneu de véhicule (2), en s'étendant le long de la bande de roulement et en étant fermée dans le sens de la circonférence, afin d'améliorer la traction de la roue de véhicule sur une chaussée recouverte de glace ou de neige, comprenant un anneau de fixation (5) qui se trouve sur le flanc externe de roue (4) et est constitué d'un textile dont le matériau de base est une matière plastique, comprenant des éléments de liaison (8) en forme de bandes qui relient la ceinture de roulement (6) à l'anneau de fixation (5), et comprenant un moyen élastique de maintien et de butée (7) qui se trouve sur le flanc interne de roue et est relié à la ceinture de roue (6) par les éléments de liaison (8), dispositif dans lequel la ceinture de roulement (6) présente une structure réticulée comportant des parties de chaîne à maillons (11, 35), et dans lequel, du fait de la ceinture de roulement (6) fermée dans le sens de la circonférence, les forces centrifuges apparaissant lors de l'utilisation sont absorbées à l'intérieur de la ceinture de roulement (6) et ne sont pas transmises aux éléments de liaison (8).

2. Dispositif antidérapant selon la revendication 1, **caractérisé en ce que** les parties de chaîne à maillons (11) se trouvent seulement dans le sens de la circonférence.

3. Dispositif antidérapant selon la revendication 1, **caractérisé en ce qu'**il y a deux bandes parallèles constituées de parties de chaîne à maillons (11) sur la surface de roulement (3).

4. Dispositif antidérapant selon la revendication 1, **caractérisé en ce que** la ceinture de roulement (6) comprend, disposés sur la surface de roulement (3), plusieurs éléments en forme de barreaux (9) qui sont orientés parallèlement à la génératrice de la surface de roulement (3) et espacés régulièrement les uns des autres dans le sens de la circonférence.

5. Dispositif antidérapant selon la revendication 4, **caractérisé en ce que** les éléments en forme de barreaux (9) servent à maintenir en largeur la ceinture de roulement (6).

6. Dispositif antidérapant selon la revendication 4, **caractérisé en ce que** les éléments en forme de barreaux (9) présentent des moyens (33) réduisant le patinage.

7. Dispositif antidérapant selon la revendication 4, **caractérisé en ce qu'**au moins quelques-uns, mais de préférence tous les éléments en forme de barreaux (9) sont de forme tubulaire et qu'un élément de liaison (8) passe dans chaque élément en forme de barreau (9) tubulaire.

8. Dispositif antidérapant selon la revendication 4, **caractérisé en ce que** chaque élément en forme de barreau (9) présente sur ses côtés disposés dans le sens de la circonférence, des moyens d'ancrage (27, 28) pour des chaînes à maillons (11).

9. Dispositif antidérapant selon la revendication 1, **caractérisé en ce que** la ceinture de roulement (6) présente des éléments métalliques (23) qui sont enveloppés par un élastomère (24) ou un polymère (24).

10. Dispositif antidérapant selon la revendication 1, **caractérisé en ce que** la ceinture de roulement (6) est souple en flexion au moins par rapport à des axes perpendiculaires à l'étendue longitudinale de la ceinture de roulement (6).

11. Dispositif antidérapant selon la revendication 1, **caractérisé en ce que** l'anneau de fixation (5) est souple en flexion.

12. Dispositif antidérapant selon la revendication 1, **caractérisé en ce que** le matériau textile constituant l'anneau de fixation (5) est un non tissé (18) ou un voile.

13. Dispositif antidérapant selon la revendication 12, **caractérisé en ce que** le matériau non tissé (18) est lié thermiquement.

14. Dispositif antidérapant selon la revendication 1, **caractérisé en ce que** l'anneau de fixation (5) présente au moins une bande de tissu.

15. Dispositif antidérapant selon la revendication 14, **caractérisé en ce que** la bande de tissu (16) présente une armure unie.

16. Dispositif antidérapant selon la revendication 1, **caractérisé en ce que** le matériau textile constituant l'anneau de fixation (5) est une structure entrelacée (17, 36), de préférence sous la forme d'un câble.

17. Dispositif antidérapant selon la revendication 1, **caractérisé en ce que** l'anneau de fixation (4) est fabriqué à partir d'un tronçon de tissu circulaire (38) enroulé de manière à former un rouleau.

18. Dispositif antidérapant selon la revendication 1, **caractérisé en ce que** les bords (14, 15) de l'anneau de fixation sont armés.

19. Dispositif antidérapant selon la revendication 18, **caractérisé en ce que** l'armature est constituée d'un élastomère qui entoure le bord (14, 15) de l'anneau de fixation (5) et est lié par matière à l'anneau de fixation (5).

20. Dispositif antidérapant selon la revendication 1, **caractérisé en ce que** les éléments de liaison (8) sont reliés par couture à l'anneau de fixation (5).

21. Dispositif antidérapant selon la revendication 1, **caractérisé en ce que** les éléments de liaison (8) sont faits d'un matériau textile.

22. Dispositif antidérapant selon la revendication 1, **caractérisé en ce que** le moyen élastique de maintien (7) est constitué d'un anneau en élastomère.

23. Dispositif antidérapant selon la revendication 22, **caractérisé en ce que** l'anneau en élastomère est moulé d'une seule pièce par injection.

24. Dispositif antidérapant selon la revendication 1, **caractérisé en ce que** les éléments de liaison (8) forment sur le côté du moyen élastique de maintien (7), des boucles (23) dans lesquelles est inséré le moyen élastique de maintien (7).

25. Dispositif antidérapant selon la revendication 24, **caractérisé en ce que** les boucles (23) sont fermées par une couture ou une liaison par matière.
